# EUROPÄISCHE PATENTSCHRIFT

(11) **EP 2 751 792 B1**
(45) Veröffentlichungstag und Bekanntmachung des Hinweises auf die Patenterteilung: **28.10.2015**
(21) Anmeldenummer: 11779353.9
(22) Anmeldetag: 30.09.2011
(51) Int. Cl.: G08B 13/24, G06K 7/10, H04N 5/225, H04N 5/33, H04N 7/18

(54) **BILDERFASSUNGSVORRICHTUNG, INSBESONDERE PERSONENZÄHLEINRICHTUNG, MIT EINEM IM INFRAROTBEREICH TRANSPARENTEN UND IM OPTISCH SICHTBAREN BEREICH UNDURCHSICHTIGEN GEHÄUSE**
IMAGE-CAPTURING DEVICE, IN PARTICULAR PERSON-COUNTING DEVICE HAVING A HOUSING WHICH IS TRANSPARENT IN THE INFRARED RANGE AND NONTRANSPARENT IN THE OPTICALLY VISIBLE RANGE
DISPOSITIF DE CAPTURE D'IMAGE, NOTAMMENT APPAREIL DE COMPTAGE DE PERSONNES, COMPRENANT UN BOÎTIER TRANSPARENT DANS LE DOMAINE INFRAROUGE ET NON TRANSPARENT DANS LE DOMAINE VISIBLE

(30) Priorität: 01.09.2011 EP 11179781
(43) Veröffentlichungstag der Anmeldung: 09.07.2014
(73) Patentinhaber: Siemens Schweiz AG, 8047 Zürich (CH)
(72) Erfinder: WIESER, Dieter, 8700 Küsnacht (CH)
(74) Vertreter: Maier, Daniel Oliver
(86) Internationale Anmeldenummer: PCT/EP2011/067195
(87) Internationale Veröffentlichungsnummer: WO 2013/029692

(56) Entgegenhaltungen:
- EP-A2- 0 435 007
- WO-A1-2009/011860
- GB-A- 2 475 416
- US-A- 4 271 358

## Beschreibung

Bilderfassungsvorrichtung, insbesondere Personenzähleinrichtung, mit einem im Infrarotbereich transparenten und im optisch sichtbaren Bereich undurchsichtigen Gehäuse

Die Erfindung betrifft eine Bilderfassungsvorrichtung, welche ein Gehäuse und eine im Gehäuse aufgenommene Wärmebildkamera bzw. Wärmebildkamera zur insbesondere fortlaufenden Erfassung von Wärmebildern und zur Generierung entsprechender Bilddaten aufweist.

Weiterhin betrifft die Erfindung eine als Personenzähleinrichtung eingerichtete Bilderfassungsvorrichtung und einen Gefahrenmelder mit einer derartigen Bilderfassungsvorrichtung.

Schliesslich betrifft die Erfindung ein System aus einer Mehrzahl derartiger Bilderfassungsvorrichtungen und aus einer übergeordneten Zentrale.

Aus der Offenlegungsschrift GB 2475416 A ist eine Wärmebild-Überwachungskamera bekannt, die einen in einem hermetisch abgedichteten Gehäuse schwenkbar angeordneten Wärmebildsensor aufweist. Das Gehäuse weist eine im sichtbaren Licht opak erscheinende Kuppel auf, die aus einem infrarotdurchlässigen Werkstoff geformt ist. Dadurch kann eine Person nachverfolgt, d.h. getrackt werden, ohne dass sich die Person der Überwachungsmassnahme bewusst ist.

Es sind viele Vorrichtungen und Systeme bekannt, die dazu eingerichtet sind, Bilder und Videos von Personen auszunehmen und an entsprechende Ausgabegeräte, wie z.B. auf einen Monitor, zu Überwachungszwecken auszugeben. Weitere bekannte Vorrichtungen und Systeme sind ferner dazu eingerichtet, die von einer Kamera ausgegebenen Bild- oder Videodaten auszuwerten, um z.B. die Anzahl von Personen innerhalb eines optischen Erfassungsbereichs fortlaufend zu ermitteln. Derartige Einrichtungen werden auch als Peraonenzähleinrichtungen bezeichnet.

Die genannten Vorrichtungen und Systeme haben den Nachteil, dass die Bilderfassung in vielen Anwendungsurngebungen, wie z.B. in Hotels, aus Gründen des Schutzes der Privatsphäre, nicht toleriert wird bzw. rechtlich nicht zulässig ist.

Mit "Schutz der Privatsphäre" oder der sogenannten "Privacy" ist insbesondere der Schutz einer Person vor technischen oder personellen Massnahmen gemeint, die einen Rückschluss auf die wahre Identität einer Person erlauben. Derartige Massnahmen sind z.B. die Bild- oder Videoauswertung von Bild- und Videodaten, die von einer herkömmlichen Kamera erfasst und ausgegeben werden. So ist es z.B. mittels Bildvergleich auf Basis aufwändiger Bildalgorithmen möglich, die Identität einer Person automatisiert zu ermitteln.

Ein weiterer Nachteil der bekannten Vorrichtungen und Systeme ist es, dass die blosse Anwesenheit einer Kamera oder die einer Glaskuppel mit dahinter angeordneter Kamera ausreicht, um die Privatsphäre einer Person empfindlich zu stören.

Davon ausgehend ist es eine Aufgabe der Erfindung, eine Bilderfassungsvorrichtung anzugeben, welche die obengenannten Probleme vermeidet. Insbesondere ist eine Aufgabe der vorliegenden Erfindung, eine Bilderfassungsvorrichtung anzugeben, welche eine Bild- und Videoüberwachung ermöglicht und welche zugleich den Schutz der Privatsphäre einer beobachteten Person wahrt.

Es ist eine weitere Aufgabe der Erfindung, eine Personenzähleinrichtung, einen Gefahrenmelder sowie ein entsprechendes System anzugeben.

Die Aufgabe der Erfindung wird durch die Gegenstände der unabhängigen Ansprüche gelöst. Vorteilhafte Ausführungsformen der vorliegenden Erfindung sind in den abhängigen Ansprüchen angegeben.

Erfindungsgemäss ist die Kamera eine Wärmebildkamera zur Erfassung von Wärmebildern. Es ist zumindest ein Teil des in einem Blickfeld der Wärmebildkamera liegenden Gehäuses oder ein als optische Linse ausgebildetes Gehäuseteil derart beschaffen, dass dieses im Infrarotbereich zumindest weitgehend transparent und im optisch sichtbaren Bereich undurchsichtig, insbesondere opak ist.

Mit Infrarotbereich ist hier insbesondere der Längenwellenbereich von 3 µm bis 50 µm gemeint, der nach DIN 5031 auch als mittleres Infrarot, abgekürzt als MIR, bezeichnet wird.

Der besondere Vorteil der vorliegenden Erfindung ist, dass eine solche Bilderfassungseinrichtung schon rein äusserlich von einer beobachteten Person nicht als unangenehm oder als Bedrohung empfunden wird, da keine transparenten, insbesondere glasklaren Optikteile einer Kamera erkennbar sind. Vielmehr erscheinen die Gehäuseteile der beobachtenden Person optisch weiss oder zumindest opak weiss oder auch opak farbig, wie z.B. grau, rot, blau opak etc..

Ein weiterer Vorteil ist, dass bereits rein technisch durch das Fehlen des nicht ausgewerteten bzw. des nicht auswertbaren optisch sichtbaren Bereichs für den Menschen keine Identifikation einer Person, zumindest keine verlässliche Identifikation möglich ist. Mit anderen Worten ist eine Personenidentifikation durch Bild- oder Videoauswertung von erfassten Wärmebildern durch entsprechendes Beobachtungspersonal kaum verlässlich möglich. Selbiges trifft auch auf die Identifizierung von Personen durch rechnergestützte Bildverarbeitung der Wärmebilder zu. Hier sind schlichtweg die Einflüsse von körperlichem Wohlbefinden und Belastungszustand einer Person sowie die Einflüsse der Umgebungstemperatur zu dominant.

Darüberhinaus kann das Auflösungsvermögen der Wärmebildkamera so gewählt werden, dass eine Person bei bestimmungsgemässer Anbringung der Bilderfassungsvorrichtung, insbesondere an der Decke, mit einer maximalen Auflösung im Bereich von 1 bis 20 cm, insbesondere in einem Bereich von 5 bis 10 cm, erfasst wird. Ein derartiges grobes Raster lässt im Prinzip keinen verwertbaren Rückschluss auf die Identität einer Person zu.

Nach einer Ausführungsform ist das Gehäuseteil aus einem Werkstoff hergestellt, welcher für infrarotes Licht, insbesondere in einem Wellenlängenbereich von 7,5 µm bis 20 µm weitgehend transparent ist. Ein derartiger Werkstoff kann z.B. ein Kunststoff, ein Glas oder eine Keramik sein.

Nach einer besonderen Ausführungsform ist der Werkstoff ein transparenter Kunststoff, insbesondere ein Polymer, in welchem Streupartikel eingebracht sind. Dabei sind insbesondere der Volumenanteil und die Grössenverteilung der Streupartikel so bestimmt, dass die Streupartikel das sichtbare Licht zerstreuen und das infrarote Licht zum Grossenteil passieren lassen. Vorzugsweise liegt die Grössenverteilung der Streupartikel im Bereich der Wellenlänge des infraroten Lichts, das heisst im Bereich von 7,5 µm bis 20 µm.

Ein derartiges Gehäuse bzw. ein derartiger Gehäusebereich lässt sich z.B. aus Polyethylen herstellen, in welche UVstabilisierte TiO₂- oder ZnO-Partikel eingebracht sind. Es sind auch andere geeignete Partikel bekannt, wie z.B. Industrie-Diamant.

Alternativ oder zusätzlich kann zumindest ein Teil der Oberfläche des im Blickfeld der Wärmebildkamera liegenden Gehäuses oder das als optische Linse ausgebildete Gehäuseteil eine derartige Strukturierung aufweisen, dass diese das sichtbare Licht zerstreut und das infrarote Licht zum Grossenteil passieren lässt. Die Strukturierung weist vorzugsweise Strukturbreiten im Bereich der Wellenlänge des Infrarotlichts auf, das heisst Strukturbreiten im Bereich von 7,5 µm bis 20 µm. Die Strukturen können z.B. Punktierungen oder Linien sein. Eine solche Strukturierung kann z.B. durch Ätzen, feinstes Bürsten oder Elektronenpolieren der Linsenoberfläche oder Gehäuseteiloberfläche erreicht werden.

Nach einer bevorzugten Ausführungsform weist die Wärmebildkamera einen Thermopile-Wärmebildsensor oder einen Mikrobolometer-Wärmebildsensor auf. Ein Thermopile-Wärmebildsensor oder auch Thermopile-Array kann eine Auflösung 32x31 Pixeln, 64x62 Pixeln oder eine noch höherer Auflösung aufweisen. Derartige Thermopile-Arrays sind z.B. von der Fa. Heimann Sensor GmbH aus Deutschland erhältlich.

Alternativ kann die Infrarot-Kamera ein Bolometer-Array mit gleicher, ähnlicher oder höherer Auflösung sein. Derartige Mikrobolometer-Arrays sind z.B. von der Fa. FLIR Systems aus den USA erhältlich.

Der Vorteil bei beiden technologischen Varianten liegt darin, dass keine Kühlung der integrierten Komponenten erforderlich ist. Der Wärmedetektionsbereich liegt typischerweise im Bereich von etwa 7,5 µm bis 15 µm.

Nach einer Ausführungsform ist die Bilderfassungsvorrichtung dazu eingerichtet, die von der Wärmebildkamera erzeugten Bilddaten an einer kabelgebundenen und/oder funkgestützten Datenschnittstelle der Bilderfassungsvorrichtung auszugeben.

Die kabelgebundene Datenschnittstelle kann z.B. eine Anschlussbuchse zum Anschliessen an ein Bussystem sein. Das Bussystem kann z.B. ein Feldbus, ein CAN-Bus oder ein LAN-Bus sein. Über das Bussystem kann zugleich auch die elektrische Versorgung der Bilderfassungseinrichtung erfolgen.

Die funkgestützte Datenschnittstelle kann z.B. eine WLAN-Funkdatenschnittstelle sein.

Einer weiteren Ausführungsform zufolge weist die Bilderfassungsvorrichtung eine mit der Wärmebildkamera datentechnisch verbundene elektronische Verarbeitungseinheit auf. Letztere kann zur Detektion eines Feuers im Blickfeld der Wärmebildkamera im Sinne eines Flammenmelders auf Basis eines ersten Bildverarbeitungsverfahrens eingerichtet sein. Die elektronische Verarbeitungseinheit ist vorzugsweise eine prozessorgestützte Verarbeitungseinheit wie z.B. ein Mikrocontroller. Das auf der Verarbeitungseinheit ausführbare Programm kann derart eingerichtet sein, dass bestimmte signifikante Flackerfrequenzen offenen Feuers detektiert werden können. Weiterhin kann die Bilderfassungsvorrichtung eine im Gehäuse angeordnete separate Detektionseinheit zur Detektion von Brand-, Rauch- oder Brandgaspartikeln aufweisen. Derartige Detektionseinheiten können z.B. eine optische Messkammer nach dem Streuprinzip, ein Gassensor oder eine akustooptische Messkammer sein.

Insbesondere weist dann die Bilderfassungsvorrichtung eine mit der Detektionseinheit signal- oder datentechnisch verbundene elektronische Verarbeitungseinheit auf, welche dazu eingerichtet ist, einen Detektionswert und/oder eine daraus abgeleitete Messgrösse als Mass für die Konzentration von detektierten Brand-, Rauch- oder Brandgaspartikeln und/oder eine daraus abgeleitete Alarm- oder Warnmeldung zu ermitteln.

Die Aufgabe der Erfindung wird zudem durch eine als Personenzähleinrichtung eingerichtete Bilderfassungsvorrichtung gelöst. Insbesondere ist diese Personenzähleinrichtung eine statische Personenzähleinrichtung, welche in der Lage ist, prinzipiell alle im Erfassungsbereich anwesenden Personen zu detektieren. Statisch bedeutet dabei, dass nicht Durchgänge über eine imaginäre Linie oder Zone gezählt werden und anschliessend die Gesamtanzahl von Personen durch Aufsummieren bestimmt wird. Vielmehr bedeutet statisch, dass in jedem Moment die aktuelle Anzahl von Personen - unabhängig von der "Vorgeschichte" ermittelt werden kann. Vorzugsweise weist in diesem Fall die Wärmebildkamera einen Thermopile-Wärmebildsensor oder einen Mikrobolometer-Wärmebildsensor auf. Letztere sind physikalisch bedingt in der Lage, nicht nur dynamische Änderungen des warmen Objekts zu erfassen, wie diese bei einem pyroelektrischen Bewegungsmelder der Fall ist, sondern auch statische Wärmeunterschiede zu erfassen.

Weiterhin weist die Bilderfassungsvorrichtung eine mit der Wärmebildkamera datentechnisch verbundene elektronische Verarbeitungseinheit auf, welche zur Ermittlung einer aktuellen Anzahl von Personen im Blickfeld der Wärmebildkamera auf Basis eines bildverarbeitenden Personenerkennungsverfahrens eingerichtet ist. Hierzu können die Schritte des bildverarbeitenden Personenerkennungsverfahrens in Form von Programmroutinen abgebildet sein, welche auf der Verarbeitungseinheit ausgeführt werden. Insbesondere ist das Personenerkennungsverfahrens dahingehend ausgestaltet, um - von oben betrachtet - "kreisförmige" Objekte und gegebenenfalls deren Fortbewegung zu erkennen, wobei die kreisförmigen Objekte den Köpfen von zu erfassenden Personen zugeordnet sind. Die Fortbewegungsrichtung sowie die Bewegungsgeschwindigkeit dieser "Objekte" kann z.B. als Vektor datentechnisch mit der ermittelten Anzahl von "kreisförmigen" Objekten mit ausgegeben werden. Durch die Ausgabe der Fortbewegungsrichtung und gegebenenfalls der Geschwindigkeit eines solchen Objekts ist eine Nachverfolgung von Personen von einem optischen Erfassungsbereich zu einem angrenzenden optischen Erfassungsbereich z.B. übergeordnet durch eine Zentrale möglich.

Schliesslich ist für diese Ausführungsform das Gehäuse der Bilderfassungsvorrichtung auch zugleich das Gehäuse der Personenzähleinrichtung.

Die Aufgabe der Erfindung wird weiterhin durch einen Gefahrenmelder, insbesondere durch einen Brandmelder, mit einer Detektionseinheit zur Detektion von Rauch-, Rauch- oder Brandgaspartikeln gelöst, wobei der Gefahrenmelder zusätzlich eine erfindungsgemässe Bilderfassungsvorrichtung bzw. Wärmebilderfassung aufweist und wobei das Gehäuse der Bilderfassungsvorrichtung zugleich das Gehäuse des Gefahrenmelders ist. Ein solcher Gefahrenmelder kann auch als Punktmelder mit Wärmebildkamera bzw. Infrarot-Kamera betrachtet werden.

Dadurch sind eine Bild- und Videoerfassung und zugleich eine Brandüberwachung im Umfeld des Gefahrenmelders möglich. Vorzugsweise weist der Gefahrenmelder ein Gehäuse auf, welches in seiner Bauart von anderen Brandmeldern bekannt ist. Ein derartiger Gefahrenmelder erscheint einer Person hinsichtlich des Schutzes seiner Privatsphäre als völlig bedenkenlos. Durch das optische Erscheinen als Brand- oder Gefahrenmelder wird sogar vorteilhaft das Sicherheitsgefühl der jeweiligen Person, wie z.B. eines Hotelgastes, erhöht.

Nach einer Ausführungsform weist der Gefahrenmelder eine elektronische Verarbeitungseinheit auf, welche dazu eingerichtet ist, sowohl die von der Wärmebildkamera generierten Bilddaten und/oder eine daraus aktuell ermittelte Personenanzahl als auch einen von der Detektionseinheit gebildeten Detektionswert und/oder eine daraus abgeleitete Messgrösse als Mass für die Konzentration von detektierten Rauch-, Brandoder Brandgaspartikeln und/oder eine daraus abgeleitete Alarm- oder Warnmeldung an einer kabelgebundenen und/oder funkgestützten Datenschnittstelle des Gefahrenmelders auszugeben. Die ausgegebenen Daten können dann zumindest mittelbar durch eine rechnergestützte Zentrale ausgewertet werden.

In einem solchen Fall können die Daten von der Wärmebildkamera und von der Detektionseinheit gemeinsam über einen an sich bekannten Brandmelder- oder Melderbus übertragen werden, wie z.B. mittels eines OFDM-Verfahrens (OFDM für Orthogonal Frequency-Division Multiplexing), mittels FM-Modulation-Verfahrens, mittels eines PSK-Verfahrens (PSK für Phase Shift Keying) zur Modulation digitaler Daten oder mittels eines differentiellen PSK-Verfahrens. Vorzugsweise erfolgt über einen solchen Brandmelderbus auch die gesamte elektrische Energieversorgung.

Alternativ oder zusätzlich kann die Datenübertragung auch per Funk erfolgen, wie z.B. über WLAN. Die ausgesendeten Daten können dann zumindest mittelbar durch eine rechnergestützte Zentrale ausgewertet werden.

Schliesslich wird die Aufgabe der Erfindung durch ein System aus einer Mehrzahl von erfindungsgemässen Bilderfassungsvorrichtungen und aus einer datentechnisch mit den Bilderfassungsvorrichtungen verbundenen Zentrale zur übergeordneten Erfassung der von den jeweiligen Bilderfassungsvorrichtungen übermittelten Bilddaten und/oder der jeweiligen ermittelten aktuellen Personenanzahl gelöst. Die Bilderfassungsvorrichtungen können z.B. über einen Datenbus oder Melderbus mit der Zentrale verbunden sein.

Nach einer Ausführungsform des Systems weist dieses zusätzlich eine Mehrzahl von erfindungsgemässen Gefahrenmeldern sowie gegebenenfalls herkömmlichen Brandmeldern und eine datentechnisch mit den Gefahrenmeldern verbundene Gefahrenmeldezentrale zur übergeordneten Erfassung des von den jeweiligen Gefahrenmeldern übermittelten Detektionswertes und/oder der daraus abgeleiteten Alarm- oder Warnmeldung auf.

Vorzugsweise bilden die übergeordnete Zentrale und die Gefahrenmeldezentrale eine gemeinsame Zentrale, wie z.B. einen Leitstellenrechner.

Die Erfindung sowie vorteilhafte Ausführungen der vorliegenden Erfindung werden am Beispiel der nachfolgenden Figuren erläutert. Dabei zeigen:
- FIG 1: den prinzipiellen Aufbau einer erfindungsgemässen Wärmebilderfassungsvorrichtung,
- FIG 2: eine erste beispielhafte Ausführungsform der Wärmebilderfassungsvorrichtung mit einer im Gehäuse aufgenommenen Wärmebildkamera als Baueinheit,
- FIG 3: eine zweite beispielhafte Ausführungsform mit einem als optische Linse ausgebildeten Gehäuseteil,
- FIG 4: eine dritte beispielhafte Ausführungsform zusätzlich eingerichtet zur Flammendetektion,
- FIG 5: eine perspektivische Darstellung einer Wärmebilderfassungsvorrichtung mit einem Gehäuse in der Ausgestaltung eines herkömmlichen Brandmelders gemäss einer weiteren Ausführungsform,
- FIG 6: eine perspektivische Darstellung einer Wärmebilderfassungsvorrichtung gemäss FIG 5 mit zusätzlich aufgenommener Detektionseinheit,
- FIG 7: ein Beispiel für ein System aus einer Mehrzahl erfindungsgemässer Wärmebilderfassungsvorrichtungen und aus einer Zentrale gemäss der Erfindung und
- FIG 8: ein Beispiel für ein System aus einer Mehrzahl erfindungsgemässer Wärmebilderfassungsvorrichtungen und einem Gefahrenmelder gemäss der Erfindung.

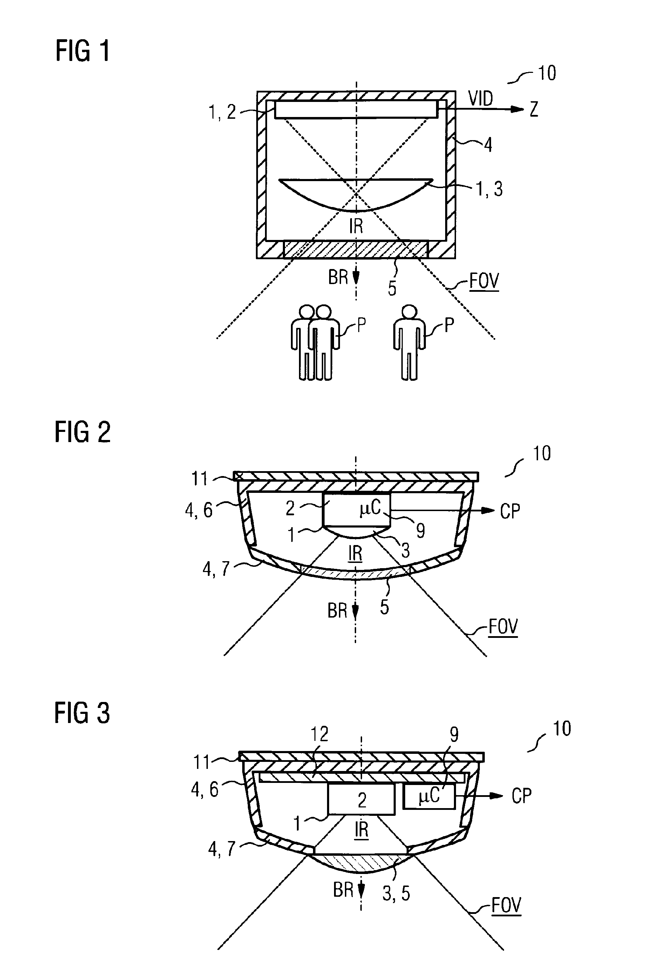

FIG 1 zeigt den prinzipiellen Aufbau einer erfindungsgemässen Wärmebilderfassungsvorrichtung 10. Mit dem Bezugszeichen 4 ist ein Gehäuse bezeichnet, welche die innenliegenden Teile der Wärmebilderfassungsvorrichtung 10 bis auf ein Eintrittsfenster 5 umgeben. Das optische Eintrittsfenster 5 ist im vorliegenden Beispiel ein separates Gehäuseteil. Das Gehäuse 4 kann zudem einteilig oder mehrteilig ausgeführt sein. Es ist vorzugsweise aus einem Kunststoff, insbesondere aus einem lichtdichten Kunststoff hergestellt, wie z.B. aus schwarzem oder weissem Kunststoff. Eine im Gehäuse 4 aufgenommene Wärmebildkamera 1 weist einen Wärmebildsensor 2 und eine davor geschaltete optische Linse 3 auf, welche ein optisches Abbild von in einem Blickfeld bzw. optischen Erfassungsbereich FOV der Wärmebildkamera 1 befindlichen Objekten auf den Wärmebildsensor 2 fokussiert, wie z.B. die drei gezeigten Personen P im optischen Erfassungsbereich FOV der Wärmebildkamera 1.

Der Wärmebildsensor 2 ist vorzugsweise ein Thermopile-Array oder ein Mikrobolometer-Array. Die optische Linse 3 ist aus einem für Infrarotlicht, insbesondere in einem Wellenlängenbereich von 3 bis 50 µm, vorzugsweise im Bereich von 7,5 µm bis 20 µm, optisch transparent. Die Linse 3 kann z.B. aus Saphir oder Germanium gefertigt sein. Der Wärmebildsensor kann für einen Wellenlängenbereich von 1 bis 2 µm auch ein Siliziumsensor sein. Er kann für den Wellenlängenbereich von 3 bis 5 µm ein Indium-Gallium-Arsenid-Sensor oder Bleisulfid-Sensor sein. Er kann für einen Wellenlängenbereich von 1 bis 5 µm auch ein Indium-Antimon-Detektor oder Cadmium-Quecksilber-Tellurid-Detektor sein. Er kann schliesslich für den Wellenlängenbereich von 8 bis 14 µm auch ein Gallium-Arsenid-Quantentopf-Detektor sein.

Mit dem Bezugszeichen IR ist ferner Infrarotlicht bezeichnet, welches von aussen durch das Eintrittsfenster 5 hindurch in das Gehäuseinnere gelangt. Mit BR ist schliesslich noch die Blickrichtung bzw. die optische Hauptachse der Wärmebildkamera 1 bezeichnet. Ergänzend wird angemerkt, dass die Wärmebildkamera 1 natürlich auch schwenkbar, wie z.B. motorisch ferngesteuert schwenkbar, im Gehäuse 4 angeordnet sein kann. Die Blickrichtung BR sowie das Blickfeld FOV der Wärmebildkamera 1 ändern sich in entsprechender Weise.

Mit VID sind die von der Wärmebildkamera 1, insbesondere vom Wärmebildsensor 2 generierten und ausgegebenen Bilddaten bezeichnet. Der Wärmebildkamera 1 weist vorzugsweise eine nicht weiter dargestellte elektronische Verarbeitungseinheit, wie z.B. einen Videocontroller auf, der die vom Wärmebildsensor 2 ausgegebenen Sensordaten aufbereitet, gegebenenfalls datentechnisch komprimiert und in ein entsprechendes Bild- oder Videodatenformat zur Übertragung der Bilddaten VID umsetzt, wie z.B. in ein bildorientiertes JPEG-Format oder in ein videoorientiertes MPEG-Format. Die Bilddaten VID können dann z.B. an einer kabelgebundenen Videoschnittstelle ausgegeben werden, wie z.B. an einer Firewire-Schnittstelle. Sie können alternativ oder zusätzlich über Funk ausgegeben werden, wie z.B. über WLAN.

Gemäss der Erfindung ist weiterhin zumindest ein Teil 5 des in einem Blickfeld FOV der Wärmebildkamera 1 liegenden Gehäuses 4 derart beschaffen, dass dieses im Infrarotbereich zumindest weitgehend transparent und im optisch sichtbaren Bereich undurchsichtig, insbesondere opak, ist. Für den Fall einer schwenkbaren Wärmebildkamera 1 ist das zumindest eine Gehäuseteil 5 entsprechend grösser zu dimensionieren. Der Werkstoff des zumindest einen Gehäuseteils 5 kann z.B. ein transparenter Kunststoff, insbesondere ein Polymer sein, in welchem Streupartikel eingebracht sind, oder der eine Strukturierung aufweist, die sichtbares Licht zerstreut und das infrarote Licht zum Grossenteil passieren lässt. Mit "sichtbarem Licht" ist der für den Menschen optisch wahrnehmbare Lichtwellenlängenbereich von etwa 380 nm bis 780 nm gemeint.

FIG 2 zeigt eine erste beispielhafte Ausführungsform der Wärmebilderfassungsvorrichtung 10 mit einer im Gehäuse 4 aufgenommenen Wärmebildkamera 1 als Baueinheit. Im vorliegenden Beispiel ist die Gehäuseform der Baueinheit an die eines Brand- oder Rauchmelders bzw. eines als Punktmelder realisierten Gefahrenmelders angelehnt. Derartige bekannte Bauformen erwecken bei einem Betrachter keinerlei Argwohn. Vielmehr erwecken diese Bauformen beim Betrachter ein erhöhtes positives Sicherheitsgefühl, da offensichtlich der Aufenthaltsbereich des Betrachters auf Feuer und Rauch hin überwacht wird.

Mit dem Bezugszeichen 11 ist ein Meldersockel bezeichnet, an dem das Gehäuse 4 der Baueinheit wieder lösbar angebracht werden kann. Mit 6 ist ein Grundkörper des Gehäuses 4 und mit 7 ein Deckel oder eine Kappe des Gehäuses 4 bezeichnet. Letztere können z.B. auf den Grundkörper 6 aufgesteckt werden.

Mit dem Bezugszeichen 9 ist ferner eine elektronische Verarbeitungseinheit, wie z.B. ein Mikrocontroller, bezeichnet. Im vorliegenden Beispiel bilden der Wärmebildsensor 2, die optische Linse 3 und die elektronischer Verarbeitungseinheit 9 eine Baueinheit.

Der Mikrocontroller 9 ist ferner dazu eingerichtet, mittels eines auf dem Mikrocontroller 9 ausgeführten bildverarbeitenden Personenerkennungsverfahrens die aktuelle Anzahl CP von im Blickfeld FOV der Wärmebildkamera 1 anwesender Personen P fortlaufend zu ermitteln und auszugeben, indem z.B. mittels eines Mustervergleichs die Anzahl von kreisförmigen Objekten, welche "Köpfe von oben" darstellen, gezählt werden.

Die in FIG 2 sowie auch in der nachfolgenden FIG 3 gezeigte Vorrichtung kann somit auch als Personenzähleinrichtung betrachtet werden.

FIG 3 zeigt eine zweite beispielhafte Ausführungsform mit einem als optische Linse 3 ausgebildeten Gehäuseteil 5. In diesem Fall können z.B. die elektronische Verarbeitungseinheit 9 und der Wärmebildsensor 2 auf einem Schaltungsträger 12 angeordnet sein, während die als Gehäuseteil 5 ausgebildete optische Linse 3 in einem Deckel 7 mit zentraler Öffnung aufgenommen ist.

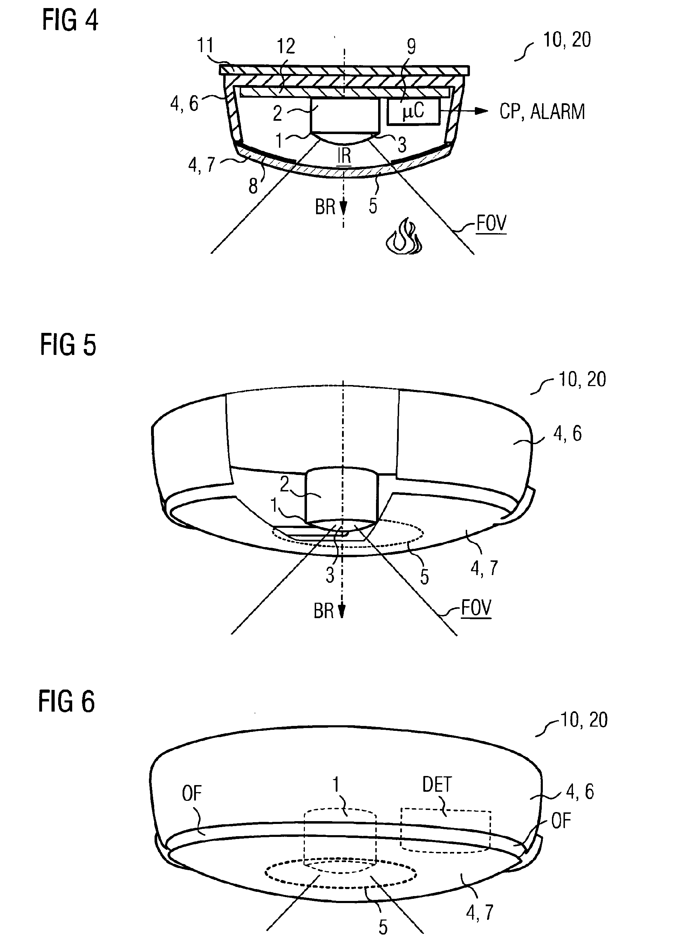

FIG 4 zeigt eine dritte beispielhafte Ausführungsform zusätzlich eingerichtet zur Flammendetektion. Die gezeigte Bilderfassungsvorrichtung 10 weist eine mit der Wärmebildkamera 1 datentechnisch verbundene elektronische Verarbeitungseinheit 9 auf, welche zur Detektion eines Feuers im Blickfeld FOV der Wärmebildkamera 1 im Sinne eines Flammenmelders auf Basis eines flammendetektierenden Bildverarbeitungsverfahrens eingerichtet ist. Eine solche Vorrichtung kann daher auch als Gefahrenmelder 20 mit integrierter Wärmebilderfassung oder als Flammenmelder bezeichnet werden. Im Falle einer Flammendetektion kann dann mittels der Verarbeitungseinheit 9 eine Feueralarmmeldung ALARM ausgegeben werden, wie z.B. an eine damit signal- oder datentechnisch verbundene Brandmeldezentrale.

Zudem ist der Deckel 7 im Ganzen beispielhaft aus einem Werkstoff gefertigt, der im Infrarotbereich zumindest weitgehend transparent und im optisch sichtbaren Bereich undurchsichtig, insbesondere opak, ist. Zur Eingrenzung des Blickfelds FOV und zur Abschirmung anderer Bauelemente im Gehäuseinneren kann an der Innenseite des Deckels 7 z.B. eine lichtdichte Folie im Sinne einer Lochblende angebracht sein, wie z.B. aufgeklebt.

FIG 5 zeigt eine perspektivische Darstellung einer Wärmebilderfassungsvorrichtung 10 mit einem Gehäuse 4 in der Ausgestaltung eines herkömmlichen Brandmelders gemäss einer weiteren Ausführungsform. In diesem Fall ist die Wärmebildkamera 1 zentral im Gehäuse 4 angeordnet.

FIG 6 zeigt eine perspektivische Darstellung einer Wärmebilderfassungsvorrichtung 10 gemäss FIG 5 mit zusätzlich aufgenommener Detektionseinheit DET. In diesem Fall ist die Wärmebildkamera 1 wiederum zentral im Gehäuse 4 angeordnet. Zusätzlich ist im Inneren des Gehäuses 4 eine separate Detektionseinheit DET zur Detektion von Brand-, Rauch- oder Brandgaspartikeln aufgenommen. Mit OF sind Öffnungen oder Schlitze im Gehäuse 4 bezeichnet, durch welche die zu detektierenden Brand-, Rauch- oder Brandgaspartikel in das Gehäuseinnere zu der Detektionseinheit DET gelangen können. Die Detektionseinheit DET ist signal- oder datentechnisch mit der elektronischen Verarbeitungseinheit 9 verbunden, die dazu eingerichtet ist, einen Detektionswert und eine daraus abgeleitete Messgrösse als Mass für die Konzentration von detektierten Brand-, Rauch- oder Brandgaspartikeln zu ermitteln.

Im vorliegenden Beispiel wird eine Alarmmeldung ALARM ausgegeben, wenn der Detektionswert einen vorgegebenen Grenzwert überschreiten sollte. Die Alarmmeldung ALARM kann z.B. als akustisches und/oder optisches Signal ausgegeben werden, und/oder daten- oder signaltechnisch auch an eine Brandmeldezentrale weitergeleitet werden.

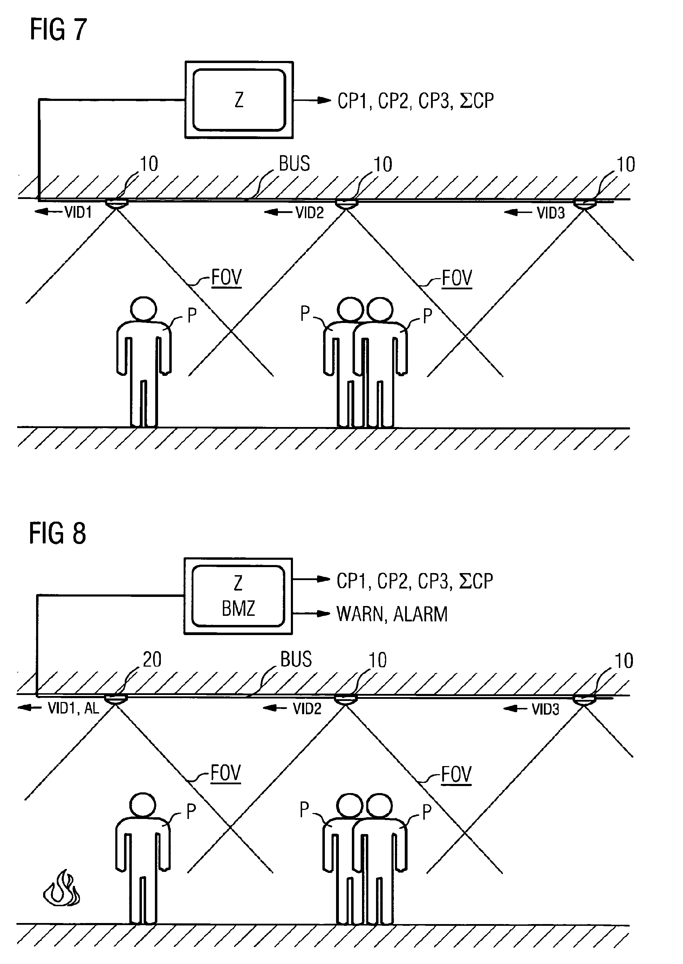

FIG 7 zeigt ein Beispiel für ein System aus einer Mehrzahl erfindungsgemässer Wärmebilderfassungsvorrichtungen 10 und aus einer Zentrale Z gemäss der Erfindung.

Das System weist eine Mehrzahl von Bilderfassungsvorrichtungen 10 auf, von denen nur drei in der vorliegenden FIG 7 dargestellt sind. Die Bilderfassungsvorrichtungen 10 sind über einen Melder- oder Datenbus BUS in Linie datentechnisch mit der Zentrale Z verbunden. Sie können z.B. in einem Abstand von 5 bis 10 m beabstandet sein. Die Zentrale Z ist zur übergeordneten Erfassung der von den Bilderfassungsvorrichtungen 10 übermittelten Bilddaten VID1-VID3 eingerichtet. Sie weist ferner nicht weiter gezeigte Mittel auf, um aus den jeweiligen empfangenen Bilddaten VID1-VID3 jeweils eine Anzahl CP1-CP3 sowie Gesamtpersonenzahl ∑CP aus diesen Anzahlen CP1-CP3 zu ermitteln. Die Mittel können z.B. ein Personenerkennungscomputerprogramm auf Basis von Bildverarbeitungsprogrammroutinen sein, welches auf einer prozessorgestützten Verarbeitungseinheit in der Zentrale Z ausgeführt wird. Im vorliegenden Beispiel ermittelt die Zentrale Z aus den Bilddaten VID1-VID3 einen Wert 1 für CP1, einen Wert 2 für CP2 und einen Wert 0 für CP3.

Alternativ oder zusätzlich können die jeweiligen Bilderfassungsvorrichtungen P bereits dazu eingerichtet sein, je einen Wert für die Personenanzahl CP1, CP2, CP3 zu ermitteln und auf den Melder- oder Datenbus BUS auszugeben. Die Zentrale Z kann dann die empfangenen Personenanzahlen CP1-CP3 aufaddieren und z.B. auf einem Monitor visualisieren, wie z.B. in einem Flurplan des betreffenden Gebäudes.

Die Zentrale Z kann aber auch dazu eingerichtet sein, ausgewählte, auswählbare oder alle empfangenen Bilddaten VID1-VID3 von den Wärmebilderfassungsvorrichtungen 10 auf einem Monitor der Zentrale Z darzustellen. Die Bilddaten VID1-VID3 können auch Videodaten sein, so dass das von der jeweiligen Wärmebilderfassungsvorrichtung 10 erfasste Wärmebild in Form eines Wärmevideos dargestellt werden kann. Dadurch können z.B. durch eine Überwachungsperson fortlaufend die Geschehnisse im jeweiligen optischen Erfassungsbereich FOV der Wärmebilderfassungsvorrichtungen 10 mitverfolgt werden. Sind die Wärmebilderfassungsvorrichtungen 10 z.B. in verschiedenen Krankenhauszimmern verteilt angeordnet, so kann das Überwachungspersonal z.B. auch nachts erkennen, ob sich eine Person in ihrem Bett befindet oder nicht, bzw. aus dem Bett gefallen ist. Eine derartige Überwachung kann natürlich auch mittels geeigneter Überwachungssoftware automatisiert durchgeführt werden.

Ein derartiges System ist generell dazu geeignet, verschiedene Räumlichkeiten auf das Vorhandensein von Wärmequellen jeglicher Art hin zu überprüfen. Dies kann auch das unerlaubte Eindringen von Personen in einem Gebäude oder ähnliches sein.

FIG 8 zeigt ein Beispiel für ein System aus einer Mehrzahl erfindungsgemässer Wärmebilderfassungsvorrichtungen 10 und einem Gefahrenmelder 20 gemäss der Erfindung. Im Vergleich zur vorherigen FIG 7 weist das System nun zusätzlich einen erfindungsgemässen Gefahrenmelder 20 auf. Es kann allgemein eine Vielzahl derartiger Gefahrenmelder 20 an den gezeigten Melderbus BUS angeschlossen sein. Im vorliegenden Beispiel ist die gezeigte Zentrale Z zugleich auch eine Gefahrenmeldezentrale BMZ zur übergeordneten Auswertung der von den Gefahrenmeldern empfangenen Detektionswerten AL und/oder daraus abgeleiteter Alarm- oder Warnmeldungen ALARM, WARN.

Im linken Teil der FIG 8 ist ein erfindungsgemässer Gefahrenmelder 20 zu sehen, der einen Brand mittels der im Gefahrenmelder 20 integrierten Detektionseinheit DET detektiert und einen entsprechenden Alarmpegel AL auf den Melderbus BUS ausgibt. Der Gefahrenmelder 20 kann auch als Flammenmelder ausgebildet sein, wobei in diesem Fall die Wärmebildkamera 1 im Gefahrenmelder 20 zur Flammendetektion eingerichtet ist.

### Bezugszeichenliste

- 1: Wärmebildkamera, Infrarot-Kamera
- 2: Wärmebildsensor, Thermopile-Array, Mikrobolometer-Array
- 3: optische Linse, optisch wirksames Bauelement
- 4: Gehäuse
- 5: Gehäuseteil, Eintrittsfenster
- 6: Grundkörper
- 7: Deckel, Abdeckung, Kappe
- 8: Blende, Lochblende, Abblendfolie
- 9: Verarbeitungseinheit, Mikrocontroller
- 10: Bilderfassungsvorrichtung, Personenzähleinrichtung, Punktmelder
- 11: Sockel
- 12: Schaltungsträger, Platine
- 20: Gefahrenmelder mit integrierter Wärmebilderfassung
- AL: Detektionswert, Alarmpegel
- ALARM: Alarmmeldung, Feuermeldung, Brandmeldung
- BMZ: Brandmeldezentrale
- BR: Blickrichtung, optische Achse
- BUS: Informationsbus, Datenbus, Melderbus, Brandmelderbus
- CP, CP1-CP3: Personenanzahl
- DET: Detektor, Rauchdetektor, Feuerdetektor, Gasdetektor
- FOV: Blickfeld, Field-of-View
- IR: Infrarotes Licht
- OF: Gehäuseöffnung
- P: Person
- ∑CP: Gesamtpersonenanzahl
- VID, VID1-VID3: Bilddaten, Videodaten
- WARN: Warnmeldung
- Z: Zentrale, Zentrale mit Bildauswerteeinheit

## Patentansprüche

1. Bilderfassungsvorrichtung, welche ein Gehäuse und eine im Gehäuse aufgenommene Kamera zur insbesondere fortlaufenden Bilderfassung und zur Generierung entsprechender Bilddaten aufweist, wobei die Kamera eine Wärmebildkamera (1) zur Erfassung von Wärmebildern ist, und wobei zumindest ein Teil (5) des in einem Blickfeld (FOV) der Wärmebildkamera (1) liegenden Gehäuses (4, 7) oder ein als optische Linse (3) ausgebildetes Gehäuseteil (5) derart beschaffen ist, dass dieses im Infrarotbereich zumindest weitgehend transparent und im optisch sichtbaren Bereich undurchsichtig, insbesondere opak, ist, **dadurch gekennzeichnet,**
**dass** die Wärmebildkamera (1) einen Thermopile- oder Mikrobolometer-Wärmebildsensor (2) mit einem derartigen Auflösungsvermögen aufweist, dass eine Person bei bestimmungsgemässer Anbringung der Bilderfasaungsvorrichtung an der Decke mit einer maximalen Auflösung im Bereich von 1 bis 20 cm, insbesondere in einem Bereich von 5 bis 10 cm, erfasst wird.

2. Bilderfassungsvorrichtung nach Anspruch 1, **dadurch gekennzeichnet, dass** der verbleibende Teil des Gehäuses (4) im Wesentlichen lichtdicht ausgeführt ist.

3. Bilderfassungsvorrichtung nach Anspruch 1 oder 2,
**dadurch gekennzeichnet, dass** das Gehäuseteil (5) aus einem Werkstoff hergestellt ist, welcher für infrarotes Licht, insbesondere in einem Wellenlängenbereich von 7,5 µm bis 20 µm weitgehend transparent ist.

4. Bilderfassungsvorrichtung nach Anspruch 3, **dadurch gekennzeichnet, dass** der Werkstoff ein transparenter Kunststoff, insbesondere ein Polymer ist, in welchem Streupartikel eingebracht sind, wobei insbesondere der Volumenanteil und die Grössenverteilung der Streupartikel so bestimmt sind, dass die Streupartikel das sichtbare Licht zerstreuen und das infrarote Licht zum Grossenteil passieren lassen.

5. Bilderfassungsvorrichtung nach einem der vorherigen Ansprüche, **dadurch gekennzeichnet, dass** zumindest ein Teil der Oberfläche des im Blickfeld (FOV) der Wärmebildkamera (1) liegenden Gehäuses (4) oder das als optische Linse (3) ausgebildete Gehäuseteil (5) eine derartige Strukturierung aufweist, dass diese das sichtbare Licht zerstreut und das infrarote Licht zum Grossenteil passieren lässt.

6. Bilderfassungsvorrichtung nach einem der vorigen Ansprüche, **dadurch gekennzeichnet, dass** die Bilderfassungsvorrichtung dazu eingerichtet ist, die von der Wärmebildkamera (1) erzeugten Bilddaten (VID) an einer kabelgebundenen und/oder funkgestützten Datenschnittstelle der Bilderfassungsvorrichtung auszugeben.

7. Bilderfassungsvorrichtung nach einem der vorherigen Ansprüche, **dadurch gekennzeichnet, dass** die Bilderfassungsvorrichtung eine mit der Wärmebildkamera (1) datentechnisch verbundene elektronische Verarbeitungseinheit (9) aufweist, welche zur Detektion eines Feuers im Blickfeld (FOV) der Wärmebildkamera (1) im Sinne eines Flammenmelders auf Basis eines flammendetektierenden Bildverarbeitungsverfahrens eingerichtet ist.

8. Bilderfassungsvorrichtung nach einem der vorherigen Ansprüche, **dadurch gekennzeichnet,**
- **dass** die Bilderfassungsvorrichtung eine im Gehäuse (4) angeordnete separate Detektionseinheit (DET) zur Detektion von Brand-, Rauch- oder 3randgaspartikeln aufweist,
- **dass** die Bilderfassungsvorrichtung eine mit der Detektionseinheit (DET) signal- oder datentechnisch verbundene elektronische Verarbeitungseinheit (9) aufweist, und
- **dass** die elektronische Verarbeitungseinheit (9) dazu eingerichtet ist, einen Detektionswert (AL) und/oder eine daraus abgeleitete Messgrösse als Mass für die Konzentration von detektierten Brand-, Rauch- oder Brandgaspartikeln und/oder eine daraus abgeleitete Alarm- oder Warnmeldung (ALARM, WARN) zu ermitteln.

9. Eine als Personenzähleinrichtung eingerichtete Bilderfassungsvorrichtung (10) nach einem der vorherigen Ansprüche, **dadurch gekennzeichnet,**
- **dass** die Bilderfassungsvorrichtung (10) eine mit der Wärmebildkamera (1) datentechnisch verbundene elektronische Verarbeitungseinheit (9) aufweist, welche zur Ermittlung einer aktuellen Anzahl (CP) von Personen (P) im Blickfeld (FOV) der warmebildkamera (1) auf Basis eines bildverarbeitenden Personenerkennungsverfahrens eingerichtet ist, und
- **dass** das Gehäuse (4) der Bilderfassungsvorrichtung (10) zugleich das Gehäuse (4) der Personenzähleinrichtung ist.

10. Gefahrenmelder, insbesondere Brandmelder, mit einer Detektionseinheit (DET) zur Detektion von Rauch-, Rauch- oder Brandgaspartikeln, **dadurch gekennzeichnet,**
- **dass** der Gefahrenmelder zusätzlich eine Bilderfassungsvorrichtung (10) nach einem der vorigen Ansprüche 1 bis 8 aufweist, und
- **dass** das Gehäuse (4) der Bilderfassungsvorrichtung (10) zugleich das Gehäuse (4) des Gefahrenmelders ist.

11. Gefahrenmelder nach Anspruch 10, **dadurch gekennzeichnet, dass** der Gefahrenmelder eine elektronische Verarbeitungseinheit (9) aufweist, welche dazu eingerichtet ist, sowohl die von der Wärmebildkamera (1) generierten Bilddaten (VID) und/ oder eine daraus aktuell ermittelte Personenanzahl (CP) als auch einen von der Detektionseinheit (DET) gebildeten Detektionswert (AL) und/oder eine daraus abgeleitete Messgrösse als Mass für die Konzentration von detektierten Rauch-, Brand- oder Brandgaspartikeln und/oder eine daraus abgeleitete Alarm- oder Warnmeldung (ALARM, WARN) an einer kabelgebundenen und/oder funkgestützten Datenschnittstelle des Gefahrenmelders auszugeben.

12. System aus einer Mehrzahl von Bilderfassungsvorrichtung (10) nach einem der vorherigen Ansprüche 1 bis 9 und aus einer datentechnisch mit den Bilderfassungsvorrichtung (10) verbundenen Zentrale (Z) zur übergeordneten Erfassung der von den jeweiligen Bilderfassungsvorrichtungen (10) übermittelten Bilddaten (VID) und/oder der jeweiligen ermittelten aktuellen Personenanzahl (CP).

13. System nach Anspruch 12, zusätzlich aufweisend eine Mehrzahl von Gefahrenmeldern (20) nach einem der vorherigen Ansprüche 10 und 11 und eine datentechnisch mit den Gefahrenmeldern (20) verbundene Gefahrenmeldezentrale (BMZ) zur übergeordneten Erfassung des von den jeweiligen Gefahrenmeldern (10) übermittelten Detektionswertes (AL) und/oder der daraus abgeleiteten Alarm- oder Warnmeldung (ALARM, WARN).

14. System nach Anspruch 13, **dadurch gekennzeichnet, dass** die übergeordnete Zentrale (Z) und die Gefahrenmeldezentrale (BMZ) eine gemeinsame Zentrale bilden.

## Claims

1. Image-capturing device comprising a housing and a camera accommodated in the housing in particular for continuous image capturing and the generation of corresponding image data, wherein the camera is a thermal-imaging camera (1) for capturing thermal images and wherein at least one part (5) of the housing (4, 7) lying in a field of view (FOV) of the thermal-imaging camera (1) or a part of the housing (5) embodied as an optical lens (3) is constructed such that said part is at least substantially transparent in the infrared range and nontransparent, in particular opaque, in the optically visible range,
**characterised in that**
the thermal imaging camera (1) comprises a thermopile thermal-imaging sensor (2) or a microbolometer thermal-imaging sensor (2) with a resolving power such that a person is captured when the image-capturing device is mounted correctly on the ceiling, with a maximum resolution in the range of from 1 to 20 cm, in particular in a range of from 5 to 10 cm.

2. Image-capturing device according to claim 1, **characterised in that** the remaining part of the housing (4) is substantially light-proof.

3. Image-capturing device according to claim 1 or 2, **characterised in that** the part of the housing (5) is made of a material which is substantially transparent to infrared light, in particular in a wavelength range of from 7.5 µm to 20 µm.

4. Image-capturing device according to claim 3, **characterised in that** the material is a transparent plastic, in particular a polymer, into which diffusing particles have been introduced, wherein in particular the volume content and the size distribution of the diffusing particles are determined such that the diffusing particles diffuse the visible light and to a large extent allow the infrared light to pass through.

5. Image-capturing device according to one of the preceding claims, **characterised in that** at least one part of the surface of the housing (4) lying in the field of view (FOV) of the thermal-imaging camera (1) or the part of the housing (5) embodied as an optical lens (3) is structured such that it diffuses the visible light and to a large extent allows the infrared light to pass through.

6. Image-capturing device according to one of the preceding claims, **characterised in that** the image-capturing device is configured to output the image data (VID) generated by the thermal-imaging camera (1) to a cabled and/or radio-controlled data interface of the image-capturing device.

7. Image-capturing device according to one of the preceding claims, **characterised in that** the image-capturing device comprises an electronic processing unit (9) connected to the thermal-imaging camera (1) by means of data technology, which is configured to detect a fire in the field of view (FOV) of the thermal-imaging camera (1) in the sense of a flame alarm based on a flame-detecting image-processing method.

8. Image-capturing device according to one of the preceding claims, **characterised in that**
- the image-capturing device comprises a separate detection unit (DET) arranged in the housing (4) for the detection of fire-, smoke- or combustion-gas particles,
- the image-capturing device comprises an electronic processing unit (9) connected to the detection unit (DET) by means of signalling or data technology, and
- the electronic processing unit (9) is configured to determine a detection value (AL) and/or a measured value derived therefrom as a measure of the concentration of the detected fire-, smoke- or combustion-gas particles and/or an alarm or warning signal (ALARM, WARN) derived therefrom.

9. Image-capturing device (10) configured as a person-counting mechanism according to one of the preceding claims, **characterised in that**
- the image-capturing device (10) comprises an electronic processing unit (9) connected to the thermal-imaging camera (1) by means of data technology, which is configured to determine a current number (CP) of people (P) in the field of view (FOV) of the thermal-imaging camera (1) based on an image-processing person-recognition method and
- the housing (4) of the image-capturing device (10) is simultaneously the housing (4) of the person-counting mechanism.

10. Hazard alarm, in particular a fire alarm with a detection unit (DET) for the detection of smoke- or combustion gas particles, **characterised in that**
- the hazard alarm also comprises an image-capturing device (10) according to one of the preceding claims 1 to 8 and
- the housing (4) of the image-capturing device (10) is simultaneously the housing (4) of the hazard alarm.

11. Hazard alarm according to claim 10, **characterised in that** the hazard alarm comprises an electronic processing unit (9) which is configured to output both the image data (VID) generated by the thermal-imaging camera (1) and/or a number of people (CP) currently determined therefrom and a detection value (AL) formed by the detection unit (DET) and/or a measured value derived therefrom as a measure of the concentration of detected smoke, fire or combustion gas particles and/or an alarm or warning signal (ALARM, WARN) derived therefrom to a cabled and/or radio-controlled data interface of the hazard alarm.

12. System comprising a plurality of image-capturing devices (10) according to one of the preceding claims 1 to 9 and a control centre (Z) connected to the image-capturing device (10) by means of data technology for the higher-ranking capturing of the image data (VID) transmitted by the respective image-capturing devices (10) and/or the respective current number of people (CP) determined.

13. System according to claim 12, additionally comprising a plurality of hazard alarms (20) according to one of the preceding claims 10 and 11 and a hazard alarm control centre (BMZ) connected to the hazard alarms (20) by means of data technology for the higher-ranking capturing of the detection value (AL) transmitted by the respective hazard alarms (10) and/or the alarm or warning signal (ALARM, WARN) derived therefrom.

14. System according to claim 13, **characterised in that** the higher-ranking control centre (Z) and the hazard alarm control centre (BMZ) form a joint control centre.

## Revendications

1. Dispositif de capture d'images qui présente un boîtier et une caméra logée dans le boîtier, servant en particulier à la capture d'images en continu et à la génération de données d'images correspondantes, où la caméra est une caméra thermique (1) servant à la capture d'images thermiques, et où au moins une partie (5) du boîtier (4, 7) se trouvant dans un champ de vision (FOV) de la caméra thermique (1), ou une partie de boîtier (5) conçue comme une lentille optique (3), est réalisée de telle manière, que cette partie de boîtier est, dans le domaine infrarouge, au moins dans une large mesure transparente et, dans le domaine optiquement visible, est non transparente, en particulier opaque,
**caractérisé en ce que** la caméra thermique (1) présente un capteur d'images thermiques (2), à thermopile ou à microbolomètre, en ayant un pouvoir de résolution tel, qu'une personne, dans le cas d'une fixation - conforme à l'usage prévu - du dispositif de capture d'images, réalisée au plafond, est filmée avec une résolution maximale dans la zone comprise entre 1 cm et 20 cm, en particulier dans une zone comprise entre 5 cm et 10 cm.

2. Dispositif de capture d'images selon la revendication 1, **caractérisé en ce que** la partie restante du boîtier (4) est réalisée en étant pratiquement étanche à la lumière.

3. Dispositif de capture d'images selon la revendication 1 ou 2, **caractérisé en ce que** la partie de boîtier (5) est fabriquée dans un matériau qui, pour une lumière infrarouge, est dans une large mesure transparent, en particulier dans une plage de longueur d'onde de 7,5 µm à 20 µm.

4. Dispositif de capture d'images selon la revendication 3, **caractérisé en ce que** le matériau est une matière plastique transparente, en particulier un polymère dans lequel sont introduites des particules de diffusion, où en particulier la part de volume et la répartition dimensionnelle des particules de diffusion sont déterminées de manière telle, que les particules de diffusion diffusent la lumière visible et laissent passer, en grande partie, la lumière infrarouge.

5. Dispositif de capture d'images selon l'une quelconque des revendications précédentes, **caractérisé en ce qu'**au moins une partie de la surface du boîtier (4) se trouvant dans le champ de vision (FOV) de la caméra thermique (1), ou la partie de boîtier (5) conçue comme une lentille optique (3), présente une structuration telle, que celle-ci diffuse la lumière visible et laisse passer, en grande partie, la lumière infrarouge.

6. Dispositif de capture d'images selon l'une quelconque des revendications précédentes, **caractérisé en ce que** le dispositif de capture d'images est agencé dans le but de fournir à une interface de données - câblée et/ou radio - du dispositif de capture d'images, les données d'images (VID) produites par la caméra thermique (1).

7. Dispositif de capture d'images selon l'une quelconque des revendications précédentes, **caractérisé en ce que** le dispositif de capture d'images présente une unité de traitement électronique (9) connectée à la caméra thermique (1) par la technique informatique, unité de traitement qui, sur la base d'un procédé de traitement d'images détectant des flammes, est agencée à la façon d'un détecteur de flammes servant à la détection d'un feu dans le champ de vision (FOV) de la caméra thermique (1).

8. Dispositif de capture d'images selon l'une quelconque des revendications précédentes, **caractérisé**
- **en ce que** le dispositif de capture d'images présente une unité de détection (DET) séparée, disposée dans le boîtier (4), servant à la détection de particules de fumée, d'incendie ou de gaz d'incendie,
- **en ce que** le dispositif de capture d'images présente une unité de traitement électronique (9) connectée à l'unité de détection (DET), par la technique des signaux ou par la technique informatique, et
- **en ce que** l'unité de traitement électronique (9) est agencée dans le but de déterminer une valeur de détection (AL) et/ou une grandeur mesurée provenant de ladite unité de traitement, comme mesure pour la concentration de particules de fumée, d'incendie ou de gaz d'incendie ayant été détectées et/ou de déterminer un message d'alarme ou d'avertissement (ALARM, WARN) provenant de ladite unité de traitement.

9. Dispositif de capture d'images (10) agencé comme un appareil de comptage de personnes selon l'une quelconque des revendications précédentes, **caractérisé**
- **en ce que** le dispositif de capture d'images (10) présente une unité de traitement électronique (9) connectée à la caméra thermique (1) par la technique informatique, unité de traitement qui, sur la base d'un procédé de reconnaissance des personnes par un traitement de l'image, est agencée pour la détermination d'un nombre réel (CP) de personnes (P) dans le champ de vision (FOV) de la caméra thermique (1), et
- **en ce que** le boîtier (4) du dispositif de capture d'images (10) est en même temps le boîtier (4) de l'appareil de comptage de personnes.

10. Détecteur de danger, en particulier détecteur d'incendie, comprenant une unité de détection (DET) servant à la détection de particules de fumée, d'incendie ou de gaz d'incendie, **caractérisé**
- **en ce que** le détecteur de danger présente en outre un dispositif de capture d'images (10) selon l'une quelconque des revendications précédentes 1 à 8, et
- **en ce que** le boîtier (4) du dispositif de capture d'images (10) est en même temps le boîtier (4) du détecteur de danger.

11. Détecteur de danger selon la revendication 10, **caractérisé en ce que** le détecteur de danger présente une unité de traitement électronique (9) qui est agencée dans le but de fournir à une interface de données - câblée et/ou radio - du détecteur de danger, aussi bien les données d'images (VID) générées par la caméra thermique (1) et/ou un nombre de personnes (CP) réellement déterminé d'après ces données d'images, qu'une valeur de détection (AL) formée par l'unité de détection (DET) et/ou une grandeur mesurée provenant de celle-ci, comme mesure pour la concentration de particules de fumée, d'incendie ou de gaz d'incendie ayant été détectées et/ou un message d'alarme ou d'avertissement (ALARM, WARN) provenant de ladite unité de détection.

12. Système se composant d'une pluralité de dispositifs de capture d'images (10) selon l'une quelconque des revendications 1 à 9, et d'une centrale (Z) connectée aux dispositifs de capture d'images (10), par la technique informatique, pour la saisie prioritaire des données d'images (VID) transmises par les dispositifs de capture d'images respectifs (10) et/ou pour la saisie du nombre de personnes (CP) respectif réellement déterminé.

13. Système selon la revendication 12, présentant en outre une pluralité de détecteurs de danger (20) selon l'une des revendications précédentes 10 et 11, et une centrale de détection de danger (BMZ) connectée aux détecteurs de danger (20), par la technique informatique, pour la saisie prioritaire de la valeur de détection (AL) transmise par les détecteurs de danger respectifs (20) et/ou pour la saisie du message d'alarme ou d'avertissement (ALARM, WARN) provenant desdits détecteurs de danger.

14. Système selon la revendication 13, **caractérisé en ce que** la centrale prioritaire (Z) et la centrale de détection de danger (BMZ) forment une centrale commune.
